# EUROPEAN PATENT SPECIFICATION

(11) **EP 4 666 253 B1**
(45) Date of publication and mention of the grant of the patent: **02.12.2026**
(21) Application number: 24705639.3
(22) Date of filing: 14.02.2024
(51) Int. Cl.: G06V 10/143, G06V 10/10, G06V 10/46, G06V 10/60

(54) **APPARATUS AND METHOD FOR DETERMINING A CONDITION OF A SOLID OBJECT, VEHICLE, MOBILE DEVICE AND METHOD FOR TRAINING A MACHINE-LEARNING MODEL**
VORRICHTUNG UND VERFAHREN ZUR BESTIMMUNG EINES ZUSTANDS EINES FESTEN OBJEKTS, FAHRZEUG, MOBILE VORRICHTUNG UND VERFAHREN ZUM TRAINIEREN EINES MASCHINENLERNMODELLS
APPAREIL ET PROCÉDÉ DE DÉTERMINATION D'UN ÉTAT D'UN OBJET SOLIDE, VÉHICULE, DISPOSITIF MOBILE ET PROCÉDÉ D'ENTRAINEMENT D'UN MODÈLE D'APPRENTISSAGE MACHINE

(30) Priority: 17.02.2023 EP 23157315
(43) Date of publication of application: 24.12.2025
(73) Proprietor: Sony Group Corporation, Tokyo 108-0075 (JP); Sony Europe B.V., Weybridge, Surrey KT13 0XW (GB)
(72) Inventor: FACIUS, Zoltan, 70327 Stuttgart (DE); SCHINZEL, Matthias, 70327 Stuttgart (DE)
(74) Representative: 2SPL Patentanwälte PartG mbB
(86) International application number: PCT/EP2024/053704
(87) International publication number: WO 2024/170611

(56) References cited:
- EP-A1- 3 795 731
- DING ZHENYANG ET AL: "Demonstration of Compact In situ Mueller-Matrix Polarimetry Based on Binary Polarization Rotators", IEEE ACCESS, vol. 7, 1 January 2019 (2019-01-01), pages 144561 - 144571, XP011750420, DOI: 10.1109/ACCESS.2019.2945812
- LISA W LI: "Comparing Classification Performance of Mueller Matrix Parameters for Diffuse Materials", ELECTRONIC IMAGING, vol. 32, no. 14, 26 January 2020 (2020-01-26), US, pages 263 - 1, XP093158406, ISSN: 2470-1173, DOI: 10.2352/ISSN.2470-1173.2020.14.COIMG-263
- B. AL BUGAMI: "Characterization of vine, Vitis vinifera, leaves by Mueller polarimetric microscopy", THIN SOLID FILMS, vol. 764, 1 January 2023 (2023-01-01), AMSTERDAM, NL, pages 139594, XP093158411, ISSN: 0040-6090, Retrieved from the Internet <URL:https://pdf.sciencedirectassets.com/271603/1-s2.0-S0040609022X00229/1-s2.0-S0040609022004965/main.pdf?X-Amz-Security-Token=IQoJb3JpZ2luX2VjEAMaCXVzLWVhc3QtMSJHMEUCIQCByE7GrFXDx1eHPfRLIm02jdGOa46ClPLVucAqYD+eSgIgfGtQWyrEOj4MEbst/yhm374RoQ3EsV0zTCdBeLqEYjwqswUIXBAFGgwwNTkwMDM1NDY4NjUiDAqBJpgfoV6aHms3q> DOI: 10.1016/j.tsf.2022.139594
- YIRONG LIU ET AL: "Polarization Characterization and Evaluation of Healing Process of the Damaged-skin Applied with Chitosan and Silicone Hydrogel Applicator", 2020 13TH INTERNATIONAL CONGRESS ON IMAGE AND SIGNAL PROCESSING, BIOMEDICAL ENGINEERING AND INFORMATICS (CISP-BMEI), IEEE, 17 October 2020 (2020-10-17), pages 894 - 899, XP033898328, DOI: 10.1109/CISP-BMEI51763.2020.9263513

## Description

### Field

The present disclosure relates to condition monitoring. In particular, examples of the present disclosure relate to an apparatus and a method for determining a condition of a solid object, a vehicle and a mobile device.

### Background

Document Ding Zhenyang et al.: "Demonstration of Compact In situ Mueller-Matrix Polarimetry Based on Binary Polarization Rotators", 2019, XP011750420 relates to a Mueller-Matrix Polarimetry (MMP) system based on binary polarization rotators. The system consists of a miniaturized polarization analysis probe using magneto-optic crystals, capable of fully characterizing the polarization properties of free-space reflective samples.

Document Lisa W Li: "Comparing Classification Performance of Mueller Matrix Parameters for Diffuse Materials", (2020-01-26), XP093158406 relates to the suitability of various Mueller Matrix parameters for classifying diffuse materials using polarimetric imaging. A multispectral Mueller Matrix Imaging Polarimeter is used at three wavelengths (451 nm, 524 nm, 662 nm), and classification performance is evaluated using the ROC curve and the Area Under the Curve (AUC).

Condition monitoring of objects is an important task in many applications. For example, tire aging and damaging during lifetime is relevant in the context of personal safety and avoidance of accidents. Accordingly, it may be of interest to monitor the object condition at manufacture and over lifetime.

Hence, there may be a demand for determining a condition of an object.

### Summary

This demand is met by an apparatus for determining a condition of a solid object, a method for determining a condition of a solid object, a vehicle, a mobile device, and a non-transitory machine-readable medium in accordance with the independent claims. Advantageous embodiments are defined the dependent claims.

According to a first aspect, the present disclosure provides an apparatus for determining a condition of a tire. The apparatus comprises interface circuitry configured to receive image data representing a sequence of images. Each image of the sequence comprises a plurality of pixels representing a spatial distribution of intensities of reflected light being reflected from a surface of the tire. Furthermore, each image of the sequence represents the intensities for a different light polarization. The apparatus additionally comprises processing circuitry configured to determine, for at least part of the pixel positions in the images of the sequence, a respective Mueller matrix based on the intensities given in the images of the sequence. The processing circuitry is further configured to decompose the respective Mueller matrix to determine one or more optical property of the surface for the respective pixel position. The one or more optical property of the surface for the respective pixel position comprises a retardation value representing a degree of optical retardation caused by the surface. In addition, the processing circuitry is configured to determine information on the condition of the tire based on the one or more optical property of the surface for the respective pixel position. The information on the condition of the tire comprises information on a presence of cracks in the surface of the tire. The processing circuitry is configured to determine the information on the presence of cracks in the surface of the tire by determining a gradient of the retardance value over the pixel positions, if a change in magnitude of the gradient is above a magnitude threshold value, determining that a crack is present in the surface at a surface position corresponding to the one or more pixel position of the change in magnitude above the magnitude threshold value, and determining that no crack is present in the surface at surface positions corresponding to pixel positions for which the change in magnitude of the gradient is below the magnitude threshold value.

According to a second aspect, the present disclosure provides a vehicle comprising one or more tire and an apparatus for determining a condition of a tire according to the first aspect. The tire is one of the one or more tire. The vehicle further comprises one or more processor configured to control a display of the vehicle to output a graphical representation derived from the information on the condition of the tire.

According to a third aspect, the present disclosure provides a mobile device comprising an apparatus for determining a condition of a tire according to the first aspect. The mobile device further comprises one or more processor configured to control a display of the mobile device to output a graphical representation derived from the information on the condition of the tire.

According to a fourth aspect, the present disclosure provides a method for determining a condition of a tire. The method comprises receiving image data representing a sequence of images. Each image of the sequence comprises a plurality of pixels representing a spatial distribution of intensities of reflected light being reflected from a surface of the tire. Furthermore, each image of the sequence represents the intensities for a different light polarization. The method further comprises determining, for at least part of the pixel positions in the images of the sequence, a respective Mueller matrix based on the intensities given in the images of the sequence. In addition, the method comprises decomposing the respective Mueller matrix to determine one or more optical property of the surface for the respective pixel position. The one or more optical property of the surface for the respective pixel position comprises a retardation value representing a degree of optical retardation caused by the surface. Further, the method comprises determining information on the condition of the tire based on the one or more optical property of the surface for the respective pixel position. The information on the condition of the tire comprises information on a presence of cracks in the surface of the tire. Determining the information on the presence of cracks in the surface of the tire comprises determining a gradient of the retardance value over the pixel positions, if a change in magnitude of the gradient is above a magnitude threshold value, determining that a crack is present in the surface at a surface position corresponding to the one or more pixel position of the change in magnitude above the magnitude threshold value, and determining that no crack is present in the surface at surface positions corresponding to pixel positions for which the change in magnitude of the gradient is below the magnitude threshold value.

According to a fifth aspect, the present disclosure provides a non-transitory machine-readable medium having stored thereon a program having a program code for performing the method according to the fourth, when the program is executed on a processor or a programmable hardware.

### Brief description of the Figures

Some examples of apparatuses and/or methods will be described in the following by way of example only, and with reference to the accompanying figures, in which
Fig. 1 illustrates an example of an apparatus for determining a condition of a solid object;
Fig. 2 illustrates an exemplary capturing of a tire surface;
Fig. 3 illustrates a flowchart of an example of a method for training a machine-learning model;
Fig. 4 illustrates an exemplary data flow for training an Artificial Neural Network (ANN);
Fig. 5 illustrates an example of a capturing system;
Fig. 6 illustrates an example of a vehicle;
Fig. 7 illustrates an example of a tire condition determination system;
Fig. 8 illustrates an example of a mobile device; and
Fig. 9 illustrates a flowchart of an example of a method for determining a condition of a solid object.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

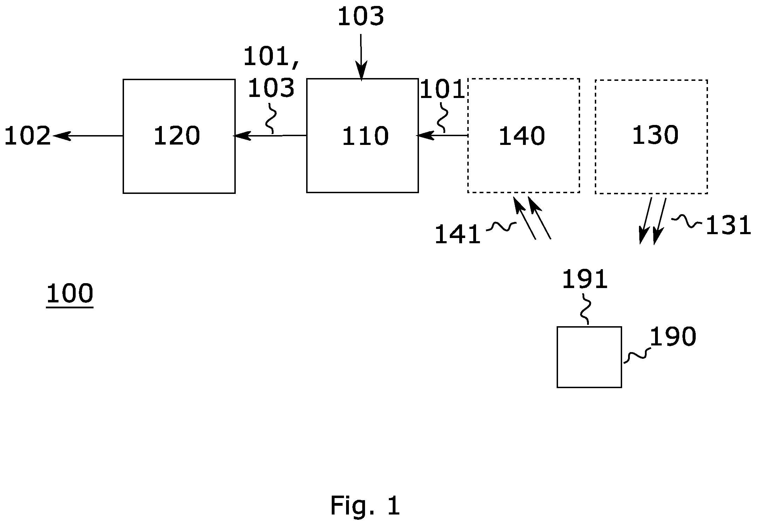

**Fig. 1** illustrates an exemplary apparatus 100 for determining a condition (state, current status) of a solid object 190. The solid object 190 may be any object or matter in a solid state of aggregation. The solid object 190 is characterized by structural rigidity and resistance to a force applied to its surface 191. Unlike a liquid, the solid object 190 does not flow to take on the shape of its container, nor does it expand to fill the entire available volume like a gas. For example, the solid object 190 may be made of or comprise organic material (which may be subject to aging processes). In other examples, the solid object 190 may be made of or comprise plastic material (which may be subject to aging processes). Still further, the solid object 190 may be made of or comprise polymeric material such as rubber (which may be subject to aging processes). In particular, the solid object 190 is a tire.

The condition of the solid object 190 describes (defines) the current state of being or constitution of the solid object 190.

The apparatus 100 comprises at least interface circuitry 110 and processing circuitry 120. The processing circuitry 120 is coupled to the interface circuitry 110. The interface circuitry 110 is configured to receive image data 101 representing (indicating, encoded with) a sequence of images. The sequence of scenes comprises a plurality of images (i.e., N ≥ 2 images). In other words, the image data 101 represent a plurality of images. Each image of the sequence comprises a plurality of pixels representing a spatial distribution of intensities (powers) of reflected light being reflected from the surface 191 of the solid object 190. In other words, the images are intensity images. The pixels of each image represent the measured light intensity (light power) of the reflected light at the respective pixel position (the pixel position or pixel coordinate defining the position of the respective pixel in the respective image of the sequence). The images of the sequence may each comprise the same number of pixels. Each image of the sequence represents the intensities for a different light polarization (e.g., linear and/or circular polarizations). In other words, a first image of the sequence represents the intensities for a first light polarization, a second of the sequence represents the intensities for a different second light polarization, etc. The image data 101 may be received from various sources as will be explained in the following.

For example, the image data 101 representing the sequence of images may be received by the interface circuitry 110 from circuitry or devices external to the apparatus 100 such as an external camera system or a database. In other examples, such as the example illustrated in Fig. 1, the apparatus 100 may optionally comprise means for capturing the images of the sequence (an external camera system may be set-up similarly).

For example, the apparatus 100 illustrated in Fig. 1 may optionally comprise an illumination element (illumination device, light source) 130 configured to illuminate the surface 191 of the solid object 190. This is exemplarily illustrated in Fig. 1, in which the illumination element 130 emits light 131 toward the surface 191. In particular, the illumination element 130 may be configured to sequentially illuminate the surface 191 of the solid object 190 with light 131 of different polarizations. For example, the illumination element 130 may be configured to sequentially illuminate the surface 191 of the solid object 190 with light of different linear and circular light polarizations. The light 131 may be of any suitable wavelength. The light 131 may comprise one or more of ultraviolet light (wavelength from approx. 100 nm to approx. 380 nm), visible light (wavelength from approx. 380 nm to approx. 780 nm) and infrared light (wavelength from approx. 780 nm to approx. 1 mm). The wavelength of the light 131 may be selected based on the solid object 190. The light 131 may, e.g., be Near InfraRed (NIR) light (wavelength from approx. 780 nm to approx. 2500 nm). For example, in case the solid object 190 is a tire, the illumination element 130 may be configured to sequentially illuminate the surface 191 of the tire 190 with infrared light exhibiting a wavelength of more than 1000 nm and less than 1700 nm. Using a wavelength of more than 1000 nm and less than 1700 nm may be beneficial due to higher reflectance and lower absorptance of the tire rubber in this wavelength range.

According to examples, the wavelength of the light 131 may be adjustable in order to examine a wavelength dependency of the surface characteristics of the surface 190. In addition to a known (e.g. predefined or adjusted) spectral distribution, the light 131 emitted by the illumination element 130 may exhibit a known (e.g. predefined or adjusted) opening angle, a known (e.g. predefined or adjusted) brightness and a known (e.g. predefined or adjusted) polarization. The illumination element 130 may illuminate a (e.g. wide and) contiguous area of the surface 191 or one or more individual section (e.g. one or more point) of the surface 191.

The illumination element 130 may comprise various components such as one or more light emitter, electronic circuitry and optics (e.g. one or more lenses for adjusting a shape or the opening angle of the light 131, one or more monochromator for adjusting the wavelength of the light 131, one or more optical filter for adjusting the wavelength of the light 131, one or more polarizer for adjusting the polarization of the light 131, one or more wave plate (retarder) such as a quarter-wave plate or a half-wave plate for adjusting the polarization of the light 131, etc.). The one or more light emitter may, e.g., be Light-Emitting Diodes (LEDs) and/or one laser diodes (e.g. one or more Vertical-Cavity Surface-Emitting Lasers, VCSELs). According to examples, a plurality of light emitters emitting light at different wavelengths may be provided and selectively activated to adjust the wavelength of the light 131 emitted by the illumination element 130. However, it is to be noted that the illumination element 130 may alternatively comprise more, less or other components than those exemplary components described above.

The apparatus 100 illustrated in Fig. 1 may optionally further comprise one or more polarization (polarimetric) image sensor 140 configured to capture the surface 190 and generate the image data 101. The polarization image sensor 140 is configured to receive the reflected light 141 from the surface 191 of the solid object 190, generate the images of the sequence based on the received reflected light 141 and output the image data 101. The polarization image sensor 140 is sensitive to at least infrared light. The polarization image sensor 140 comprises or is combined with one or more polarizer (polarization filter) for polarization filtering of the reflected light 141 such that only light of one or more specific (predefined) polarization is measured by the polarization image sensor 140. Therefore, the polarization image sensor 140 allows to specifically measure the intensity of light for one or more specific (predefined) polarization.

The processing circuitry 120 is configured to receive and process the image data 101. For example, the processing circuitry 120 may be a single dedicated processor, a single shared processor, or a plurality of individual processors, some of which or all of which may be shared, a digital signal processor (DSP) hardware, an application specific integrated circuit (ASIC), a neuromorphic processor or a field programmable gate array (FPGA). The processing circuitry 120 may optionally be coupled to, e.g., read only memory (ROM) for storing software, random access memory (RAM) and/or non-volatile memory. Optionally, the apparatus 100 may comprise further circuitry.

In particular, the processing circuitry 120 is configured to determine, for at least part of the pixel positions in the images of the sequence, a respective Mueller matrix based on the intensities given in the images of the sequence. According to example, the respective Mueller matrix may (but need not) be determined for all pixel positions in the images of the sequence based on the intensities given in the images of the sequence. The Muller matrix is a transformation matrix for the Stokes vector. The Stokes vector describes the polarization state of the light. The Muller matrix characterizes the optical interaction of the solid object 190 with the light 131 as the polarization of the light 131 is influenced by the reflection of the light at the surface 191 of the solid object 190. In other words, the polarization of the reflected light 141 depends on the reflection of the light 131 at the surface 191 of the solid object 190. This may be expressed as follows: $\vec{{S}_{o}} = M ⋅ \vec{{S}_{i}}$ (1) with *̅S̅ₒ̅*̅ denoting the Stokes vector of the light 141 being reflected from the surface 191 of the solid object 190, M denoting the Mueller matrix and *̅S̅ᵢ̅*̅ denoting the Stokes vector of the light 131 used for illuminating the surface 191 of the solid object 190.

The Mueller matrix is indicative of various optical properties of the solid object 190. An optical property is any property defining (describing) how the solid object 190 interacts with the light 131 (i.e., electromagnetic radiation) incident on the solid object 190's surface 191. For example, the Mueller matrix is indicative of a total depolarization, a linear depolarization and a circular depolarization caused by interaction of the incident light 131 with the solid object 190. Similarly, the Mueller matrix is indicative of a total diattenuation (liner dichroism), a linear diattenuation and a circular diattenuation caused by interaction of the incident light 131 with the solid object 190. The Mueller matrix is further indicative of a total retardance, a linear retardance and a circular retardance caused by interaction of the incident light 131 with the solid object 190. Matrix decomposition allow to determine desired optical properties of the solid object 190. Therefore, the processing circuitry 120 is further configured to decompose the respective Mueller matrix to determine one or more optical property of the surface 191 for the respective pixel position. Accordingly, one or optical property may be obtained for the surface portion depicted at the respective pixel position. Various techniques may be used for decomposing the respective Mueller matrix as will be explained later.

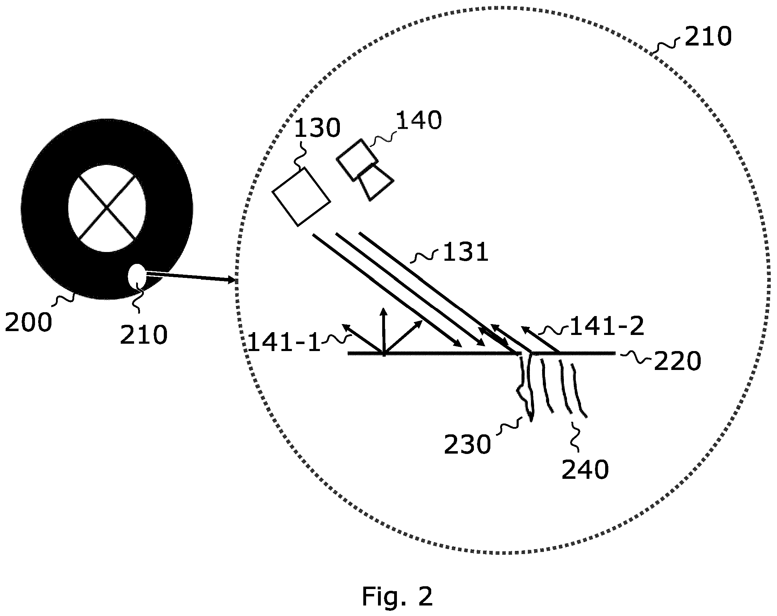

The processing circuitry 120 is further configured to determine information 102 on the condition of the solid object 190 based on the one or more optical property of the surface 191 for the respective pixel position. Various optical properties of the solid object 190 depend on the condition of the solid object 190. Accordingly, the determined one or more optical property of the surface 191 for the respective pixel position allow to determine the condition of the solid object 190. This will be explained with more details in the following with respect to **Fig. 2****.**

In the example of Fig. 2, the solid object is a tire 200. The surface of the solid object is the surface of the tire 200's sidewall. An enlargement of a section (portion) 210 of the sidewall is illustrated in the right part of Fig. 2.

The section 210 is illuminated by the illumination element 130 with polarized light 131 of different polarizations. The polarized light 131 is reflected at the surface 220 of the tire 200's sidewall. The left part of the surface 220 is not damaged. Therefore, homogenous isotropic scattering of the polarized light 131 at the surface 220 occurs. The light reflected back by the left part of the surface 220 is denoted by reference numeral 141-1 in Fig. 2. Compared to the incident polarized light 131, the reflected light 141-1 is therefore highly depolarized. In the right part of the surface 220, various micro cracks such as a surface crack 230 and sub-surface cracks 240 are present in the tire 200's sidewall. The edges of the surface crack 230 cause direct back scattering of the polarized light 131. The high density of the micro cracks causes anisotropic back scattering of the polarized light 131. The light reflected back by the right part of the surface 220 is denoted by reference numeral 141-2 in Fig. 2. Compared to the reflected light 141-1, the reflected light 141-2 is less depolarized.

The different degrees of depolarization translate to different light intensities for different light polarizations and are, hence, encoded to the sequence of images represented by the image data 101. As a consequence, the determined Mueller matrices for pixel positions representing (depicting) the left part of the surface 220 differ from the Mueller matrices for pixel positions representing the right part of the surface 220. Accordingly, after decomposition of the Muller matrices, different depolarizations properties for the left part of the surface 220 and the right part of the surface 220 are obtained. The different depolarizations properties for the left part of the surface 220 and the right part of the surface 220 allow to determine the respective condition of the left part of the surface 220 and the right part of the surface 220. For example, the presence of cracks may characterize the age or damage condition (state) of the tire 200.

It is to be noted that various properties of a solid object such as the tire 200 may be determined. This will be described in detail in the following with reference to Fig. 1 for a generic solid object 190 (which may but need not be a tire as in the example of Fig. 2).

As described above, one or more optical property of the surface 191 are obtained for the respective pixel position by decomposition of the respective Mueller matrix for the respective pixel position. The one or more optical property of the surface 191 for the respective pixel position may comprise a depolarization value representing a degree of light depolarization caused by the surface 191 as described above. Accordingly, the information on the condition of the solid object 190 may comprise an age of the solid object. The depolarization caused by the surface 191 of the object 190 changes over the lifetime of the object 190 due to aging effects (e.g., development of cracks as in the example of Fig. 2 or rubber oxygenation). The older the object 190 gets, the smaller may be the degree of depolarization caused by the surface 191 of the object 190. For example, the processing circuitry 120 may be configured to determine the age of the solid object 190 by comparing the determined depolarization value for the respective pixel position to one or more threshold. The one or more threshold is delimiting value ranges for the depolarization value for different possible ages of the solid object. That is, a first value range for the depolarization value may indicate a first possible age of the solid object, a different second value range for the depolarization value may indicate a different second possible age of the solid object, etc. The determined ages for the analyzed pixel positions may be combined (e.g., averaged) to determine the age of the solid object 190.

The one or more optical property of the surface 191 for the respective pixel position comprise a retardation value representing a degree of optical retardation caused by the surface 191. Accordingly, the information on the condition of the solid object 190 comprise information on a presence of cracks in the surface 191 of the solid object 190. Homogenic stress on the solid object 190 causes a substantially constant retardation with only small gradients along the surface 191 of the solid object 190. However, structural damages such as cracks in the surface 191 of the solid object 190 cause local and rapid changes of the degradation. The processing circuitry 120 is configured to determine the information on the presence of cracks in the surface of the solid object by determining a gradient of the retardance value over the pixel positions. Furthermore, if a change in magnitude of the gradient is above a magnitude threshold value, the processing circuitry 120 is configured to determine that a crack is present in the surface at a surface position corresponding to the one or more pixel position of the change in magnitude above the magnitude threshold value. That is, if the magnitude of the gradient is above the magnitude threshold value at one or more pixel position, it may be determined that a crack is present at these one or more pixel position. On the other hand, the processing circuitry 120 is configured to determine that no crack is present in the surface 191 at surface positions corresponding to pixel positions for which the change in magnitude of the gradient is below the magnitude threshold value.

Analyzing the depolarization values and/or the retardation values as described above may, in particular, allow to determine tire aging (e.g., caused by rubber oxygenation) and tire damaging (e.g., cracks). The retardance is indicative of the stiffness and the stretch-stress of the tire's rubber composite. As described above, homogenic stress generates a constant retardation with small gradient from top to down (on the tire's sidewall) or inside to outside (on the tire's tread) of the tire, but small local and rapid changes in retardance are a hint of structure damages in rubber.

As described above, various techniques may be used for decomposing the respective Mueller matrix as will be explained later. Some exemplary techniques will be listed in the following. However, it is to be noted that the following examples are merely for illustrative purposes and are not limiting the present disclosure. For example, a Lu-Chipman decomposition as described in Shih-Yau Lu and Russell A. Chipman, "Interpretation of Mueller matrices based on polar decomposition," J. Opt. Soc. Am. A 13, 1106-1113 (1996), a Qi-Lu-Chipman decomposition as described in Qi J, He H, Ma H, Elson DS. "Extended polar decomposition method of Mueller matrices for turbid media in reflection geometry", Opt Lett. 2017 Oct 15;42(20):4048-4051. doi: 10.1364/OL.42.004048. PMID: 29028009, a 3x3 polar decomposition as described in Qi J, Ye M, Singh M, Clancy NT, Elson DS. "Narrow band 3 × 3 Mueller polarimetric endoscopy", Biomed Opt Express. 2013 Oct 11;4(11):2433-49. doi: 10.1364/BOE.4.002433. PMID: 24298405; PMCID: PMC3829538, a reverse product decomposition as described in Razvigor Ossikovski, Antonello De Martino, and Steve Guyot, "Forward and reverse product decompositions of depolarizing Mueller matrices," Opt. Lett. 32, 689-691 (2007), a reverse Qi-Lu-Chipman decomposition as described in Qi J, Elson DS. "Mueller polarimetric imaging for surgical and diagnostic applications: a review", J Biophotonics. 2017 Aug; 10(8):950-982. doi: 10.1002/jbio.201600152. Epub 2017 May 2. PMID: 28464464 or a differential decomposition as described in Qi J, Elson DS. "Mueller polarimetric imaging for surgical and diagnostic applications: a review", J Biophotonics. 2017 Aug; 10(8):950-982. doi: 10.1002/jbio.201600152. Epub 2017 May 2. PMID: 28464464 may be used.

Alternatively, the processing circuitry 120 may be configured to decompose the respective Mueller matrix using a trained machine-learning model. The machine-learning model is a data structure and/or set of rules representing a statistical model that the processing circuitry 120 uses to decompose the respective Mueller matrix without using explicit instructions, instead relying on models and inference. The data structure and/or set of rules represents learned knowledge (e.g. based on training performed by a machine-learning algorithm as described above and below). In machine-learning, instead of a rule-based transformation of data, a transformation of data may be used, that is inferred from an analysis of training data.

The machine-learning model is trained by a machine-learning algorithm. The term "machine-learning algorithm" denotes a set of instructions that are used to create, train or use a machine-learning model. For the machine-learning model to decompose the respective Mueller matrix, the machine-learning model may be trained using predefined Muller matrices as input and predefined decompositions of the Mueller matrices as target output. By training the machine-learning model with a large set of training data and associated training content information, the machine-learning model "learns" to decompose a Muller matrix in the training data, so that a target decomposition of the Muller matrix is obtained using the machine-learning model. By training the machine-learning model using training Muller matrices and desired decompositions of the Mueller matrices, the machine-learning model "learns" a transformation between the Muller matrices and the desired output, which can be used to provide an output based on non-training Muller matrices provided to the machine-learning model.

The machine-learning model may be trained using training input data (e.g. training Mueller matrices). For example, the machine-learning model may be trained using a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. For example, a training sample may comprise one or more Mueller matrices as input data and one or more desired compositions of the one or more Mueller matrices as desired output data.

Apart from supervised learning, semi-supervised learning may be used. In semi-supervised learning, some of the training samples lack a corresponding desired output value. Supervised learning may be based on a supervised learning algorithm (e.g. a classification algorithm or a similarity learning algorithm). Classification algorithms may be used as the desired outputs of the trained machine-learning model are restricted to a limited set of values (categorical variables), i.e., the input is classified to one of the limited set of values (possible decompositions of Mueller matrix). Similarity learning algorithms are similar to classification algorithms but are based on learning from examples using a similarity function that measures how similar or related two objects are.

Furthermore, additional techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

For example, the machine-learning model may be an ANN. ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values (e.g., the respective Mueller matrix), hidden nodes that are (only) connected to other nodes, and output nodes that provide output values (e.g. decomposition of Mueller matrix). Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an ANN may comprise adjusting the weights of the nodes and/or edges of the ANN, i.e., to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values (e.g., Mueller matrices) that belong to one of two categories (e.g. different value ranges of an optical property). The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

In some examples, the machine-learning model may be a combination of the above examples.

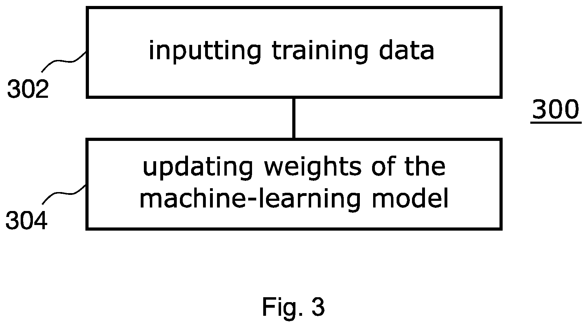

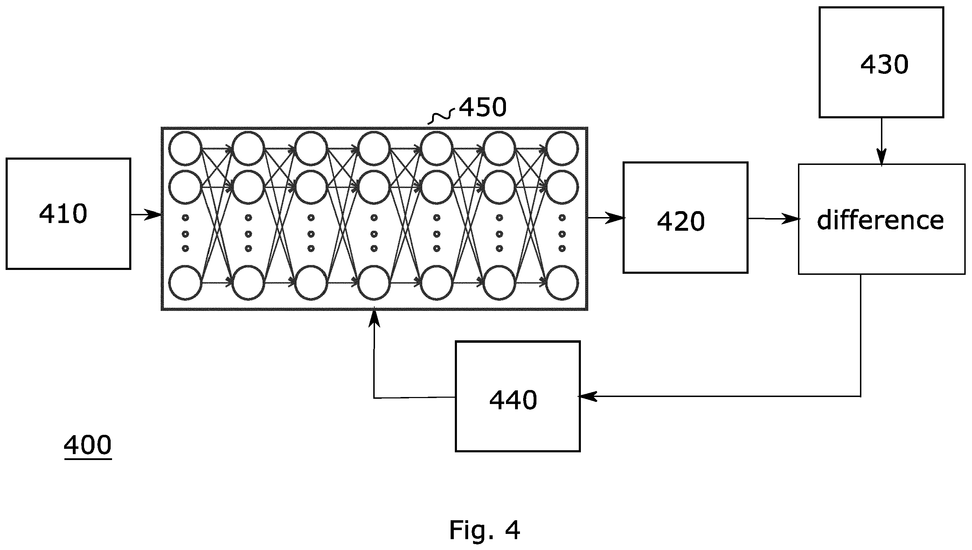

A more detailed example of training a machine-learning model for decomposing a Mueller matrix will be described below with reference to Fig. 3 and Fig. 4. **Fig. 3** illustrates a flowchart of a method 300 for training a machine-learning model for decomposing a Mueller matrix.

The method 300 comprises inputting 302, to the machine-learning model, data representing an artificially generated Mueller matrix as training data. The method 300 further comprises updating 304 weights of the machine-learning model based on a difference between the output of the machine-learning model for the training data and data representing a decomposed Mueller matrix. The decomposed Mueller matrix is a target output of the machine-learning model for the input artificially generated Mueller matrix.

The method 300 allows to train the machine-learning model in a supervised manner. As the input Mueller matrix is artificially generated, the optical properties of the object reflecting the light and, hence, the decomposed Mueller matrix are known.

More details and aspects of the method 300 are explained in connection with the proposed technique or one or more examples described above or below (e.g. Fig. 4). The method 300 may comprise one or more additional optional features corresponding to one or more aspects of the proposed technique or one or more examples described above.

**Fig. 4** illustrates a corresponding data flow 400 assuming that the machine-learning model is an ANN 450. The ANN 450 comprises an input layer, five hidden layers and an output layer. In other words, the ANN 450 is a multilayer perceptron. For example, the five hidden layers may be hidden layers with a LeakyReLu activation function. The output layer may, e.g., be a layer with linear activation function. However, it is to be noted that the method 300 is not limited to the structure of the ANN as illustrated in Fig. 4. It is to be noted that the method 300 is generally not limited to ANNs.

The training data 410 are input to the ANN 450. The training data 410 represent at least one artificially generated Mueller matrix. According to examples, the training data 410 may represent a plurality of artificially generated Mueller matrices. The at least one artificially generated Mueller matrix may, e.g., be of dimension 4x4 (e.g., flattened to 16). However, also other dimensions may be used. For example, the Mueller matrices may be generated artificially with a randomly permutated multiplication order. The at least one artificially generated Mueller matrix may, e.g., be generated using a simulation.

As the at least one Mueller matrix is artificially generated, the optical properties represented by the Mueller matrix are known. In other words, the decomposed Mueller matrix is known. For example, a diattenuation vector, a depolarization vector, a retardance vector and a total retardance as represented by the artificially generated Mueller matrix may be known and used as labels 430 for the supervised training of the ANN 450, i.e., as target (desired) output of the ANN 450 for the training data 410.

The ANN 450 outputs output data 420 representing a decomposed Mueller matrix. The difference between the actual output data 420 of the machine-learning model for the training data 410 and data 430 representing the target output of the machine-learning model (i.e., the target decomposed Mueller matrix) is determined and updated weights 440 (either absolute or relative to the currently used weights) are determined. For example, a loss function may be used for determining the updated weights. Subsequently, the weights of the ANN 450 are updated based on the determined updated weights 440.

The above described process is repeated iteratively to minimize the difference between the actual output 420 of the machine-learning model for the training data 410 and the data 430 representing the target output of the ANN 450 for the training data 410.

Returning back to Fig. 1, above mathematical expression (1) defines that the respective Mueller matrix depends on the Stokes vector *̅S̅ₒ̅*̅ of the light 141 being reflected from the surface 191 of the solid object 190 and the and the Stokes vector *̅S̅ᵢ̅*̅ of the light 131 used for illuminating (incident on) the surface 191 of the solid object 190.

In general, a Stokes vector *S* of light may be determined from the light intensities (powers) of six independent polarization states of the light: $S = \left[\begin{matrix}{S}_{0} \\ {S}_{1} \\ {S}_{2} \\ {S}_{3}\end{matrix}\right] = \left[\begin{matrix}{P}_{0 °} + {P}_{90 °} \\ {P}_{0 °} - {P}_{90 °} \\ {P}_{45 °} - {P}_{135 °} \\ {P}_{rc} + {P}_{lc}\end{matrix}\right]$ (2) with *P*_{0°} denoting the light intensity for a horizontal linear polarization state (i.e., the electric field of the light is confined along the propagation direction of the light in a plane at an angle of 0 ° with respect to a reference axis perpendicular to the propagation direction), *P*_{90°} denoting the light intensity for a vertical linear polarization state (i.e., the electric field of the light is confined along the propagation direction of the light in a plane at an angle of 90 ° with respect to the reference axis), *P*_{45°} denoting the light intensity for a linear polarization state in which the electric field of the light is confined along the propagation direction of the light in a plane at an angle of 45 ° with respect to the reference axis, *P*_{135°} denoting the light intensity for a linear polarization state in which the electric field of the light is confined along the propagation direction of the light in a plane at an angle of 135 ° with respect to the reference axis, *P_{rc}* denoting the light intensity for a right-circular polarization state and *P_{ic}* denoting the light intensity for a left-circular polarization state.

As described above, the image data 101 represent a sequence of images, wherein the images of the sequence represent the intensities for different linear and circular light polarizations. In particular, four images of the sequence may represent the intensities for linearly polarized light, the electric field of which is confined along a propagation direction of the reflected light in a plane at a respective angle with respect to a reference axis perpendicular to the propagation direction of the reflected light. The angles are 0 °, 45 °, 90 ° and 135 °. That is, four images of the sequence represent the intensities for four different linear polarization states, wherein the oscillation planes of the electric field of the reflected light are shifted by 45 ° with respective to each other for the four different linear polarization states. Furthermore, one image of the sequence may represent the intensities for left-circularly polarized light (i.e., for the left-circular polarization state), and one image of the sequence may represent the intensities for right-circularly polarized light (i.e., for the right-circular polarization state). In other words, one image of the sequence may represent the intensities for horizontally linearly polarized light, one image of the sequence may represent the intensities for vertically linearly polarized light, one image of the sequence may represent the intensities for +45 ° linearly polarized light, one image of the sequence may represent the intensities for 135 ° (also denoted as -45 °) linearly polarized light, one image of the sequence may represent the intensities for right-circularly polarized light and one image of the sequence may represent the intensities for left-circularly polarized light.

Accordingly, the Stokes vector *̅S̅ₒ̅*̅ of the light 141 being reflected from the surface 191 of the solid object 190 may be determined for the respective pixel position according to mathematical expression (2).

Similarly, the interface circuitry 120 may be configured to receive illumination data 103 indicating a respective light intensity used for illuminating the surface 191 of the solid object 190 while capturing the individual images of the sequence. For example, the illumination data 103 may indicate the respective light intensity used for illuminating the surface 191 of the solid object 190 while capturing the individual images for horizontally linearly polarized light, vertically linearly polarized light, +45 ° linearly polarized light, 135 ° (also denoted as -45 °) linearly polarized light, right-circularly polarized light and left-circularly polarized light. Additionally, the illumination data 103 may indicate the respective polarization(s) of the light 131 used for illuminating the surface 191 of the solid object 190 while capturing the individual images of the sequence.

The processing circuitry 120 may be further configured to determine the respective Mueller matrix further based on the respective light intensity used for illuminating the surface of the solid object. Similarly, the processing circuitry 120 may be further configured to determine the respective Mueller matrix further based on the respective polarization(s) of the light 131 used for illuminating the surface 191 of the solid object 190 while capturing the individual images of the sequence. In particular, the processing circuitry 120 may be configured to determine, for the respective pixel position, the Stokes vector *̅S̅ᵢ̅*̅ of the light 131 used for illuminating (incident on) the surface 191 of the solid object 190 based on the illumination data 103 according to mathematical expression (2). Accordingly, the respective Mueller matrix may be determined according to mathematical expression (1) for the respective pixel position.

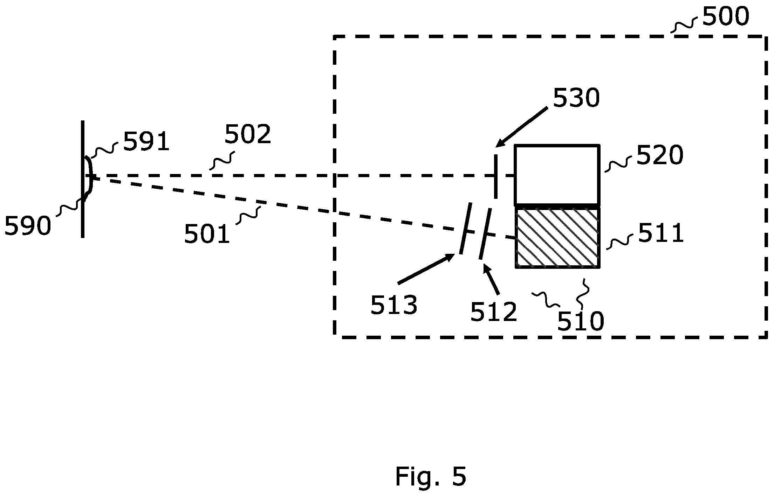

**Fig. 5** illustrates an exemplary capturing system 500 which may be used for generating image data as described above. The capturing system 500 comprises an illumination element 510 configured to sequentially illuminate the surface 591 of a solid object 590 with light 501 of different polarizations. The surface 591 of the solid object 590 reflects the light 501 such that reflected light 502 is sent back to the capturing system 500.

The capturing system 500 further comprises a polarization image sensor 520. The polarization image sensor 520 generates the images of the sequence based on the received reflected light 502 - analogously to what is described above.

The illumination element 510 comprises one or light source 511, a rotating linear polarizer 512 and a quarter-wave plate 513.

The light source 511 may, e.g., be or comprise one or more LED or laser diode emitting light 501 of a suitable wavelength such as NIR light. The light 501 emitted by the light source 511 passes the rotating linear polarizer 512. The rotating linear polarizer 512 comprises a plurality of different polarization filters. The polarization filters are each configured to let light of a specific linear polarization pass while blocking light of other polarizations. For example, the rotating linear polarizer 512 may comprise four different polarization filters, which respectively let exclusively (only) pass vertically linearly polarized light, +45 ° linearly polarized light, horizontally linearly polarized light and 135 ° linearly polarized light. The rotating linear polarizer 512 is configured to rotate the polarization filters about a rotation axis which is parallel to the propagation direction of the light 501 emitted by the light source 511 such that the light 501 emitted by the light source 511 passes different ones of the polarization filters over time. Accordingly, the surface 591 of the solid object 590 is sequentially illuminated with light 501 of different linear polarizations. The electric field of the linearly polarized light is confined along a propagation direction of the light 501 in a plane at a respective angle with respect to a reference axis perpendicular to the propagation direction of the light 501. For example, the angles may be 0 °, 45 °, 90 ° and 135 °.

For generating circularly polarized light, the illumination element 510 is configured to selectively let the light 501 pass the quarter-wave plate 513 after the light 501 passed the rotating linear polarizer 512. The quarter-wave plate 513 may e.g., be arranged at 45 ° in front of the rotating linear polarizer 512. The illumination element 510 may, e.g., comprise a mechanical structure configured to move the quarter-wave plate 513 to selectively let the light 501 pass the quarter-wave plate 513 after the light 501 passed the rotating linear polarizer 512. For example, when the light 501 after passing the rotating linear polarizer 512 is +45 ° linearly polarized light or 135 ° linearly polarized light, the illumination element 510 may be configured to selectively let the light 501 pass the quarter-wave plate 513 in order to obtain left- or right-circularly polarized light for illumination the surface 591 of the solid object 590.

By means of the rotating linear polarizer 512 and the quarter-wave plate 513, the illumination element 510 is able to sequentially illumination the surface 591 of the solid object 590 with vertically linearly polarized light, +45 ° linearly polarized light, horizontally linearly polarized light, 135 ° linearly polarized light, left- circularly polarized light and right-circularly polarized light in any desired (target) order. Accordingly, the polarization image sensor 520 is able to capture a sequence of images, wherein the images of the sequence represent the intensities of the reflected light 502 for the different linear and circular light polarizations. As described above, the images of the sequence allow to determine the respective Mueller matrix for various pixel positions in the images of the sequence.

For calibration, a quarter-wave plate 530 may be placed in front of the polarization image sensor 520 such that the reflected light 502 first passes the quarter-wave plate 530 before it reaches the polarization image sensor 520. Accordingly, circularly polarized light may be converted to linearly polarized light for calibration purposes, and vice versa. The quarter-wave plate 530 is not used during measurement operation (i.e., when capturing the images of the sequence for the determination of the respective Mueller matrix).

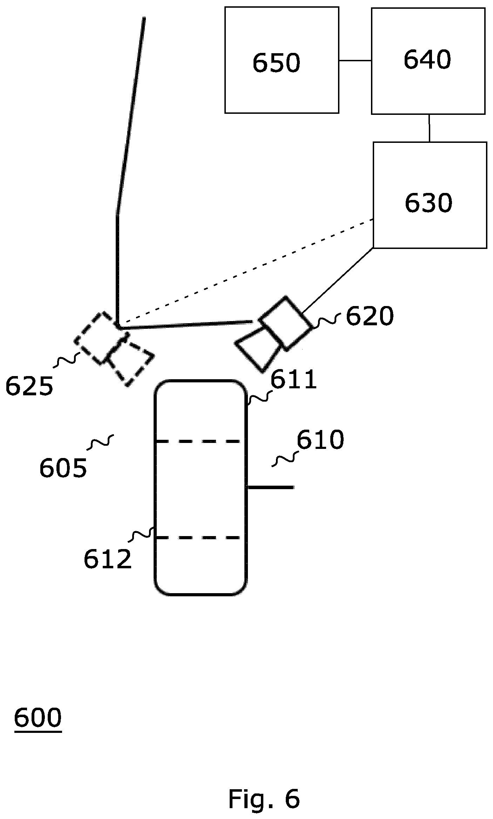

A vehicle 600 using the condition detection according to the present disclosure is illustrated in **Fig. 6****.** In general, a vehicle can be understood as a device (system) comprising one or more engine (e.g. one or more of a combustion engine, an electric engine, and a turbine) and one or more tire. The one or more tire may be driven by one or more of the one or more engine. The vehicle 600 can therefore be both a passenger vehicle and a commercial vehicle. For example, the vehicle 600 may be a car (automobile), a truck, a motorcycle, a tractor or an airplane.

In the example of Fig. 6 a single wheel 610 of the vehicle 600, which is accommodated in a wheelhouse 605 of the vehicle, is illustrated. However, it is to be noted that the present disclosure is not limited thereto. In general, the vehicle 600 may comprise one or more tire (wheel). The wheel 610 comprises a rim 612, to which a tire 611 is mounted.

The vehicle 600 further comprises an apparatus 630 for determining a condition of a solid object according to the present disclosure. In the example of Fig. 6, the solid object is the tire 611. The image data may, e.g., be supplied to the apparatus 630 by a polarization image sensor or polarization camera 620 (similar to what is described above with reference to Fig. 1, Fig. 2 and Fig. 5). The apparatus 630 is configured to determine information on the condition of the tire 611 in accordance with the proposed technique (see above and below examples). For example, aging or damages such as cracks may be determined based on the image data. As indicated by the second polarization image sensor or polarization camera 625 in Fig. 6, the vehicle 600 may comprise more than one polarization image sensor or polarization camera 620. Accordingly, different parts of the tire 611 may be condition monitored.

The vehicle 600 additionally comprises one or more processor 640 configured to control a display 650 of the vehicle to output a graphical representation derived from the information on the condition of the solid object, i.e., the information on the condition of the tire 611. For example, a warning may be output to the user in case damages such as a high number of cracks are determined. Similarly, a prompt to have a vehicle service may be output to the user in case damages such as a high number of cracks are determined. In other examples, the age status of the tire 611 may be output to the user (e.g., how much of the tire 611's lifetime has lapsed or is still available). In general, the graphical representation may, e.g., comprise symbols, graphical elements, textual elements etc. for illustrating the condition of the tire 611 based on the determined information on the condition of the tire 611.

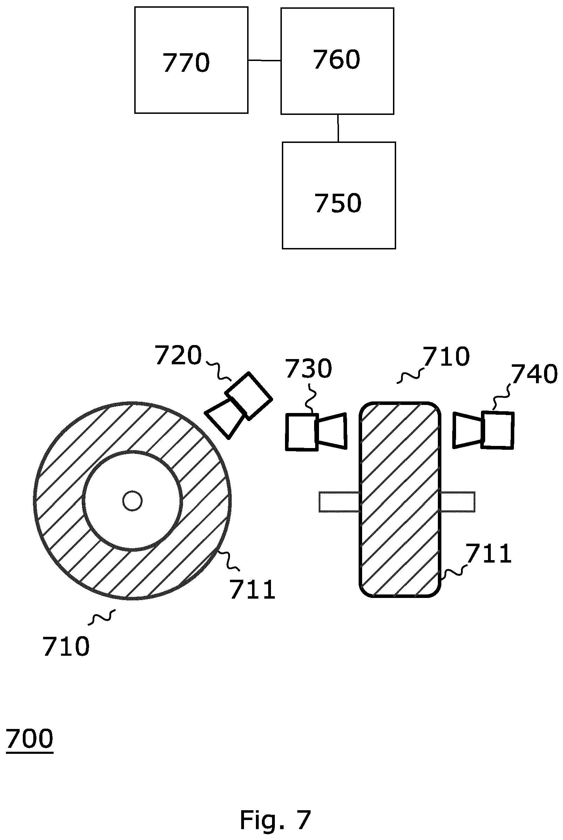

However, it is to be noted that the tire condition cannot only be monitored at the vehicle. In other examples, the tire condition may be determined as part of a manufacturing process or during a maintenance process. This is exemplarily illustrated in Fig. 7. **Fig. 7** illustrates a tire condition determination system 700.

The tire condition determination system 700 comprises one or more polarization image sensor or polarization camera to capture one or more parts of a tire 711 (similar to what is described above with reference to Fig. 1 and Fig. 2). In the example of Fig. 7, three polarization image sensors or polarization cameras 720, 730 and 740 are provided to capture both sidewalls and the tread of the tire 710. In other examples, more or less polarization image sensors or polarization cameras may be used.

The one or more polarization image sensor or polarization camera provide image data to an apparatus 750 for determining a condition of a solid object according to the present disclosure. In the example of Fig. 7, the solid object is the tire 711. The apparatus 630 is configured to determine information on the condition of the tire 711 in accordance with the proposed technique (see above and below examples). For example, aging or damages such as cracks may be determined based on the image data.

The tire condition determination system 700 additionally comprises one or more processor 760 configured to control a display 770 of the condition determination system 700 to output a graphical representation derived from the information on the condition of the solid object, i.e., the information on the condition of the tire 711. For example, a graphical representation indicating the presence of cracks may be displayed.

For example, in the course of a manufacturing process of the tire 711, the tire condition may be determined using the tire condition determination system 700 as part of a quality check.

Alternatively, during a tire service at a service station or garage, the tire condition may be determined using the tire condition determination system 700. For example, the tire condition determination system 700 may be integrated into a tire balancing machine such that the tire condition may be determined in the course of balancing the wheel 710, to which the tire 711 belongs.

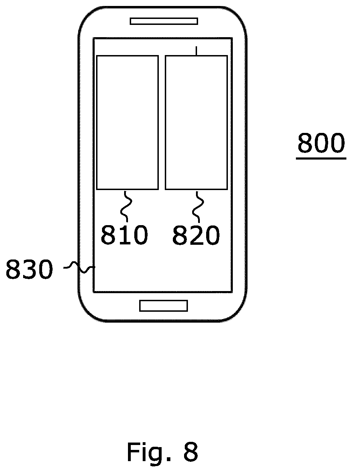

**Fig. 8** further illustrates a mobile device 800. In Fig. 8, the mobile device 800 is depicted as a mobile phone (smartphone). However, it is to be noted that the present disclosure is not limited thereto. In other examples, the mobile device 800 may be a tablet-computer, a laptop or a wearable such as a smartwatch.

The mobile device 800 comprises an apparatus 810 for determining a condition of a solid object according to the present disclosure. The image data processed by the apparatus 810 may, e.g., be provided by a polarization image sensor or polarization camera of the mobile device 800 or an external polarization image sensor or polarization camera.

The mobile device 800 additionally comprises one or more processor 820 (e.g. one or more application processor) configured to control a display 830 of the mobile device 800 to output a graphical representation derived from the information the condition of the solid object (see above for the details).

The mobile device 800 may be used for manual condition determination.

The mobile device 800 may comprise further elements such as, e.g., one or more antenna, one or more radio frequency transmitter, one or more radio frequency receiver, a modem, a baseband processor, memory, a connectivity module, a Near Field Communication (NFC) controller, an audio driver, a camera driver, sensors, removable memory, a power management integrated circuit or a smart battery.

The wireless communication circuits of the mobile device 900 may be configured to operate according to one of the 3rd Generation Partnership Project (3GPP)-standardized mobile communication networks or systems. The mobile or wireless communication system may correspond to, for example, a 5^{th} Generation New Radio (5G NR), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM), an Enhanced Data rates for GSM Evolution (EDGE) network, or a GSM/EDGE Radio Access Network (GERAN). Alternatively or additionally, the wireless communication circuits may be configured to operate according to mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

The illumination of the tire is not explicitly illustrated in the examples of Fig. 6, Fig. 7 and Fig. 8. However, it is to be noted that illumination elements as described above with respect to Fig. 1, Fig. 2 and Fig. 5 may be used.

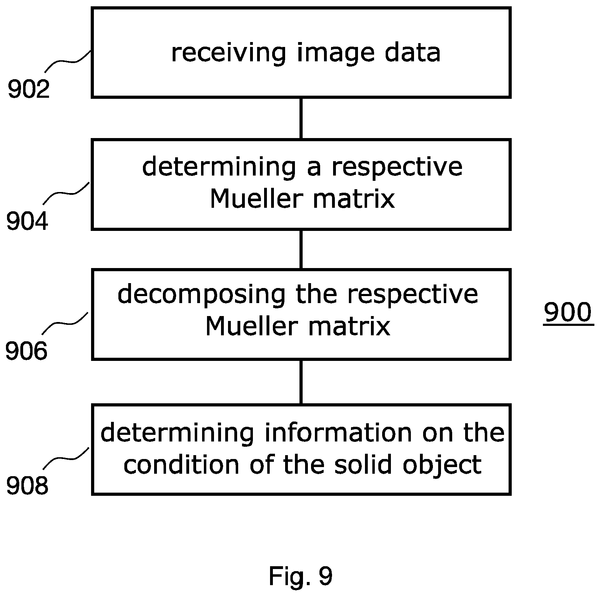

For further highlighting the condition determination described above, **Fig. 9** illustrates a flowchart of a method 900 for determining a condition of a solid object. The method 900 comprises receiving 902 image data representing a sequence of images. Each image of the sequence comprises a plurality of pixels representing a spatial distribution of intensities of reflected light being reflected from a surface of the solid object. Furthermore, each image of the sequence represents the intensities for a different light polarization. The method 900 further comprises determining 904, for at least part of the pixel positions in the images of the sequence, a respective Mueller matrix based on the intensities given in the images of the sequence. In addition, the method 900 comprises decomposing 906 the respective Mueller matrix to determine one or more optical property of the surface for the respective pixel position. Further, the method 900 comprises determining 908 information on the condition of the solid object based on the one or more optical property of the surface for the respective pixel position.

As various optical properties of the solid object depend on the condition of the solid object, the method 900 may allow to determine the condition of the solid object. Analogously to what is described above, the method 900 may, e.g., allow to determine an age of the solid object or presence of cracks on the surface of the solid object.

More details and aspects of the method 900 are explained in connection with the proposed technique or one or more examples described above (e.g. Fig. 1 to Fig. 8). The method 900 may comprise one or more additional optional features corresponding to one or more aspects of the proposed technique or one or more examples described above.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), ASICs, integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100) for determining a condition of a tire (190), the apparatus (100) comprising:
interface circuitry (110) configured to receive image data (101) representing a sequence of images, wherein each image of the sequence comprises a plurality of pixels representing a spatial distribution of intensities of reflected light (141) being reflected from a surface (191) of the tire (190), and wherein each image of the sequence represents the intensities for a different light polarization; and
processing circuitry (120) configured to:
determine, for at least part of the pixel positions in the images of the sequence, a respective Mueller matrix based on the intensities given in the images of the sequence;
decompose the respective Mueller matrix to determine one or more optical property of the surface (191) for the respective pixel position, wherein the one or more optical property of the surface (191) for the respective pixel position comprises a retardation value representing a degree of optical retardation caused by the surface (191); and
determine information (102) on the condition of the tire (190) based on the one or more optical property of the surface (191) for the respective pixel position, wherein the information (102) on the condition of the tire (190) comprises information on a presence of cracks in the surface (191) of the tire (190), and wherein the processing circuitry (120) is configured to determine the information on the presence of cracks in the surface (191) of the tire (190) by:
determining a gradient of the retardance value over the pixel positions;
if a change in magnitude of the gradient is above a magnitude threshold value, determining that a crack is present in the surface (191) at a surface position corresponding to the one or more pixel position of the change in magnitude above the magnitude threshold value; and
determining that no crack is present in the surface (191) at surface positions corresponding to pixel positions for which the change in magnitude of the gradient is below the magnitude threshold value.

2. The apparatus (100) of claim 1, wherein the processing circuitry (120) is configured to decompose the respective Mueller matrix using a trained machine-learning model.

3. The apparatus (100) of claim 1 or claim 2, wherein the one or more optical property of the surface (191)for the respective pixel position comprises a depolarization value representing a degree of light depolarization caused by the surface (191), and wherein the information on the condition of the tire (190) comprise an age of the tire (190).

4. The apparatus (100) of claim 3, wherein the processing circuitry (120) is configured to determine the age of the tire (190) by comparing the determined depolarization value for the respective pixel position to one or more threshold, the one or more threshold delimiting value ranges for the depolarization value for different possible ages of the tire (190).

5. The apparatus (100) of any one of claims 1 to 4, wherein the interface circuitry (110) is further configured to receive illumination data (103) indicating a respective light intensity used for illuminating the surface (191) of the tire (190) while capturing the individual images of the sequence, and wherein the processing circuitry (120) is configured to determine the respective Mueller matrix further based on the respective light intensity used for illuminating the surface (191) of the tire (190).

6. The apparatus (100) of any one of claims 1 to 5, wherein the images of the sequence represent the intensities for different linear and circular light polarizations.

7. The apparatus (100) of claim 6, wherein four images of the sequence represent the intensities for linearly polarized light, the electric field of which is confined along a propagation direction of the reflected light (141) in a plane at a respective angle with respect to a reference axis perpendicular to the propagation direction of the reflected light (141), the angles being 0 °, 45 °, 90 ° and 135 °, wherein one image of the sequence represents the intensities for left-circularly polarized light, and wherein one image of the sequence represents the intensities for right-circularly polarized light.

8. The apparatus (100) of any one of claims 1 to 7, further comprising:
an illumination element (130) configured to sequentially illuminate the surface (191) of the tire (190) with light (131) of different polarizations; and
a polarization image sensor configured to:
receive the reflected light (141) from the surface (191) of the tire (190);
generate the images of the sequence based on the received reflected light (141); and
output the image data (101).

9. The apparatus (100) of claim 8, wherein the illumination element (130) is configured to sequentially illuminate the surface (191) of the tire (190) with light (131) of different linear and circular light polarizations.

10. The apparatus (100) of claim 9, wherein the illumination element (130) is configured to sequentially illuminate the surface (191) of the tire (190) at least with circularly polarized light and linearly polarized light, the electric field of the linearly polarized light being confined along a propagation direction of the reflected light in a plane at a respective angle with respect to a reference axis perpendicular to the propagation direction of the reflected light, the angles being 0 °, 45 °, 90 ° and 135 °.

11. The apparatus (100) of any one of claims 8 to 10, wherein the illumination element (130) is configured to sequentially illuminate the surface (191) of the tire (190) with infrared light exhibiting a wavelength of more than 1000 nm and less than 1700 nm.

12. A vehicle (600) , comprising:
one or more tire (611);
an apparatus (630) according to any one of claims 1 to 11, wherein the tire is one of the one or more tire (100); and
one or more processor (640) configured to control a display (650) of the vehicle (600) to output a graphical representation derived from the information on the condition of the tire (611).

13. A mobile device (800), comprising:
an apparatus (810) according to any one of claims 1 to 11; and
one or more processor (820) configured to control a display (830) of the mobile device (800) to output a graphical representation derived from the information on the condition of the tire.

14. A method (900) for determining a condition of a tire, the method (900) comprising:
receiving (902) image data representing a sequence of images, wherein each image of the sequence comprises a plurality of pixels representing a spatial distribution of intensities of reflected light being reflected from a surface of the tire, and wherein each image of the sequence represents the intensities for a different light polarization; and
determining (904), for at least part of the pixel positions in the images of the sequence, a respective Mueller matrix based on the intensities given in the images of the sequence;
decomposing (906) the respective Mueller matrix to determine one or more optical property of the surface for the respective pixel position, wherein the one or more optical property of the surface for the respective pixel position comprises a retardation value representing a degree of optical retardation caused by the surface; and
determining (908) information on the condition of the tire based on the one or more optical property of the surface for the respective pixel position, wherein the information on the condition of the tire comprises information on a presence of cracks in the surface of the tire, and wherein determining the information on the presence of cracks in the surface of the tire comprises:
determining a gradient of the retardance value over the pixel positions;
if a change in magnitude of the gradient is above a magnitude threshold value, determining that a crack is present in the surface at a surface position corresponding to the one or more pixel position of the change in magnitude above the magnitude threshold value; and
determining that no crack is present in the surface at surface positions corresponding to pixel positions for which the change in magnitude of the gradient is below the magnitude threshold value.

15. A non-transitory machine-readable medium having stored thereon a program having a program code for performing the method according to claim 14, when the program is executed on a processor or a programmable hardware.

## Patentansprüche

1. Einrichtung (100) zum Bestimmen eines Zustands eines Reifens (190), wobei die Einrichtung (100) Folgendes umfasst:
eine Schnittstellenschaltungsanordnung (110), die konfiguriert ist, um Bilddaten (101) zu empfangen, die eine Sequenz von Bildern darstellen, wobei jedes Bild der Sequenz eine Vielzahl von Pixeln umfasst, die eine räumliche Verteilung von Intensitäten von reflektiertem Licht (141) darstellen, das von einer Oberfläche (191) des Reifens (190) reflektiert wird, und wobei jedes Bild der Sequenz die Intensitäten für eine unterschiedliche Lichtpolarisation darstellt; und
eine Verarbeitungsschaltungsanordnung (120), die konfiguriert ist zum:
Bestimmen, für mindestens einen Teil der Pixelpositionen in den Bildern der Sequenz, einer jeweiligen Mueller-Matrix basierend auf den in den Bildern der Sequenz gegebenen Intensitäten;
Zerlegen der jeweiligen Mueller-Matrix, um eine oder mehrere optische Eigenschaften der Oberfläche (191) für die jeweilige Pixelposition zu bestimmen, wobei die eine oder die mehreren optischen Eigenschaften der Oberfläche (191) für die jeweilige Pixelposition einen Verzögerungswert umfassen, der einen Grad an optischer Verzögerung darstellt, die durch die Oberfläche (191) verursacht wird; und
Bestimmen von Informationen (102) über den Zustand des Reifens (190) basierend auf der einen oder den mehreren optischen Eigenschaften der Oberfläche (191) für die jeweilige Pixelposition, wobei die Informationen (102) über den Zustand des Reifens (190) Informationen über ein Vorhandensein von Rissen in der Oberfläche (191) des Reifens (190) umfassen, und wobei die Verarbeitungsschaltungsanordnung (120) konfiguriert ist, um die Informationen über das Vorhandensein von Rissen in der Oberfläche (191) des Reifens (190) zu bestimmen durch:
Bestimmen eines Gradienten des Verzögerungswerts über die Pixelpositionen;
falls eine Änderung der Größe des Gradienten oberhalb eines Größenschwellenwerts liegt, Bestimmen, dass ein Riss in der Oberfläche (191) an einer Oberflächenposition vorhanden ist, die der einen oder den mehreren Pixelpositionen der Änderung der Größe oberhalb des Größenschwellenwerts entspricht; und
Bestimmen, dass kein Riss in der Oberfläche (191) an Oberflächenpositionen vorhanden ist, die Pixelpositionen entsprechen, für die die Änderung der Größe des Gradienten unterhalb des Größenschwellenwerts liegt.

2. Einrichtung (100) nach Anspruch 1, wobei die Verarbeitungsschaltungsanordnung (120) konfiguriert ist, um die jeweilige Mueller-Matrix unter Verwendung eines trainierten Maschinenlernmodells zu zerlegen.

3. Einrichtung (100) nach Anspruch 1 oder Anspruch 2, wobei die eine oder die mehreren optischen Eigenschaften der Oberfläche (191) für die jeweilige Pixelposition einen Depolarisationswert umfassen, der einen Grad der durch die Oberfläche (191) verursachten Lichtdepolarisation darstellt, und wobei die Informationen über den Zustand des Reifens (190) ein Alter des Reifens (190) umfassen.

4. Einrichtung (100) nach Anspruch 3, wobei die Verarbeitungsschaltungsanordnung (120) konfiguriert ist, um das Alter des Reifens (190) durch Vergleichen des bestimmten Depolarisationswerts für die jeweilige Pixelposition mit einem oder mehreren Schwellenwerten zu bestimmen, wobei der eine oder die mehreren Schwellenwerte Wertebereiche für den Depolarisationswert für verschiedene mögliche Alter des Reifens (190) begrenzen.

5. Einrichtung (100) nach einem der Ansprüche 1 bis 4, wobei die Schnittstellenschaltungsanordnung (110) ferner konfiguriert ist, um Beleuchtungsdaten (103) zu empfangen, die eine jeweilige Lichtintensität angeben, die zum Beleuchten der Oberfläche (191) des Reifens (190) während des Erfassens der einzelnen Bilder der Sequenz verwendet wird, und wobei die Verarbeitungsschaltungsanordnung (120) konfiguriert ist, um die jeweilige Mueller-Matrix ferner basierend auf der jeweiligen Lichtintensität zu bestimmen, die zum Beleuchten der Oberfläche (191) des Reifens (190) verwendet wird.

6. Einrichtung (100) nach einem der Ansprüche 1 bis 5, wobei die Bilder der Sequenz die Intensitäten für verschiedene lineare und zirkulare Lichtpolarisationen darstellen.

7. Einrichtung (100) nach Anspruch 6, wobei vier Bilder der Sequenz die Intensitäten für linear polarisiertes Licht darstellen, dessen elektrisches Feld entlang einer Ausbreitungsrichtung des reflektierten Lichts (141) in einer Ebene in einem jeweiligen Winkel in Bezug auf eine Referenzachse senkrecht zu der Ausbreitungsrichtung des reflektierten Lichts (141) begrenzt ist, wobei die Winkel 0°, 45°, 90° und 135° betragen, wobei ein Bild der Sequenz die Intensitäten für linkszirkular polarisiertes Licht darstellt, und wobei ein Bild der Sequenz die Intensitäten für rechtszirkular polarisiertes Licht darstellt.

8. Einrichtung (100) nach einem der Ansprüche 1 bis 7, ferner umfassend:
ein Beleuchtungselement (130), das konfiguriert ist, um die Oberfläche (191) des Reifens (190) sequenziell mit Licht (131) unterschiedlicher Polarisationen zu beleuchten; und
einen Polarisationsbildsensor, der konfiguriert ist zum:
Empfangen des reflektierten Lichts (141) von der Oberfläche (191) des Reifens (190);
Erzeugen der Bilder der Sequenz basierend auf dem empfangenen reflektierten Licht (141); und
Ausgeben der Bilddaten (101).

9. Einrichtung (100) nach Anspruch 8, wobei das Beleuchtungselement (130) konfiguriert ist, um die Oberfläche (191) des Reifens (190) sequenziell mit Licht (131) unterschiedlicher linearer und zirkularer Lichtpolarisationen zu beleuchten.

10. Einrichtung (100) nach Anspruch 9, wobei das Beleuchtungselement (130) konfiguriert ist, um die Oberfläche (191) des Reifens (190) sequenziell mindestens mit zirkular polarisiertem Licht und linear polarisiertem Licht zu beleuchten, wobei das elektrische Feld des linear polarisierten Lichts entlang einer Ausbreitungsrichtung des reflektierten Lichts in einer Ebene in einem jeweiligen Winkel in Bezug auf eine Referenzachse senkrecht zu der Ausbreitungsrichtung des reflektierten Lichts begrenzt ist, wobei die Winkel 0°, 45°, 90° und 135° betragen.

11. Einrichtung (100) nach einem der Ansprüche 8 bis 10, wobei das Beleuchtungselement (130) konfiguriert ist, um die Oberfläche (191) des Reifens (190) sequenziell mit Infrarotlicht zu beleuchten, das eine Wellenlänge von mehr als 1000 nm und weniger als 1700 nm aufweist.

12. Fahrzeug (600), umfassend:
einen oder mehrere Reifen (611);
eine Einrichtung (630) nach einem der Ansprüche 1 bis 11, wobei der Reifen einer von dem einen oder den mehreren Reifen (100) ist; und
einen oder mehrere Prozessoren (640), die konfiguriert sind, um eine Anzeige (650) des Fahrzeugs (600) zu steuern, um eine grafische Darstellung auszugeben, die aus den Informationen über den Zustand des Reifens (611) abgeleitet ist.

13. Mobile Vorrichtung (800), umfassend:
eine Einrichtung (810) nach einem der Ansprüche 1 bis 11; und
einen oder mehrere Prozessoren (820), die konfiguriert sind, um eine Anzeige (830) der mobilen Vorrichtung (800) zu steuern, um eine grafische Darstellung auszugeben, die aus den Informationen über den Zustand des Reifens abgeleitet ist.

14. Verfahren (900) zum Bestimmen eines Zustands eines Reifens, wobei das Verfahren (900) Folgendes umfasst:
Empfangen (902) von Bilddaten, die eine Sequenz von Bildern darstellen, wobei jedes Bild der Sequenz eine Vielzahl von Pixeln umfasst, die eine räumliche Verteilung von Intensitäten von reflektiertem Licht darstellen, das von einer Oberfläche des Reifens reflektiert wird, und wobei jedes Bild der Sequenz die Intensitäten für eine unterschiedliche Lichtpolarisation darstellt; und
Bestimmen (904), für mindestens einen Teil der Pixelpositionen in den Bildern der Sequenz, einer jeweiligen Mueller-Matrix basierend auf den in den Bildern der Sequenz gegebenen Intensitäten;
Zerlegen (906) der jeweiligen Mueller-Matrix, um eine oder mehrere optische Eigenschaften der Oberfläche für die jeweilige Pixelposition zu bestimmen, wobei die eine oder die mehreren optischen Eigenschaften der Oberfläche für die jeweilige Pixelposition einen Verzögerungswert umfassen, der einen Grad an optischer Verzögerung darstellt, die durch die Oberfläche verursacht wird; und
Bestimmen (908) von Informationen über den Zustand des Reifens basierend auf der einen oder den mehreren optischen Eigenschaften der Oberfläche für die jeweilige Pixelposition, wobei die Informationen über den Zustand des Reifens Informationen über ein Vorhandensein von Rissen in der Oberfläche des Reifens umfassen, und wobei das Bestimmen der Informationen über das Vorhandensein von Rissen in der Oberfläche des Reifens Folgendes umfasst:
Bestimmen eines Gradienten des Verzögerungswerts über die Pixelpositionen;
falls eine Änderung der Größe des Gradienten oberhalb eines Größenschwellenwerts liegt, Bestimmen, dass ein Riss in der Oberfläche an einer Oberflächenposition vorhanden ist, die der einen oder den mehreren Pixelpositionen der Änderung der Größe oberhalb des Größenschwellenwerts entspricht; und
Bestimmen, dass kein Riss in der Oberfläche an Oberflächenpositionen vorhanden ist, die Pixelpositionen entsprechen, für die die Änderung der Größe des Gradienten unterhalb des Größenschwellenwerts liegt.

15. Nicht-transitorisches maschinenlesbares Medium, auf dem ein Programm gespeichert ist, das einen Programmcode zum Durchführen des Verfahrens nach Anspruch 14 aufweist, wenn das Programm auf einem Prozessor oder einer programmierbaren Hardware ausgeführt wird.

## Revendications

1. Appareil (100) permettant de déterminer une condition d'un pneu (190), l'appareil (100) comprenant :
un système de circuits d'interface (110) configuré pour recevoir des données d'image (101) représentant une séquence d'images, dans lequel chaque image de la séquence comprend une pluralité de pixels représentant une distribution spatiale d'intensités de lumière réfléchie (141) étant réfléchie par une surface (191) du pneu (190), et dans lequel chaque image de la séquence représente les intensités pour une polarisation de lumière différente ; et
un système de circuits de traitement (120) configuré pour :
déterminer, pour au moins une partie des positions de pixel dans les images de la séquence, une matrice de Mueller respective en fonction des intensités données dans les images de la séquence ;
décomposer la matrice de Mueller respective pour déterminer une ou plusieurs propriétés optiques de la surface (191) pour la position de pixel respective, dans lequel la ou les propriétés optiques de la surface (191) pour la position de pixel respective comprennent une valeur de retard représentant un degré de retard optique causé par la surface (191) ; et
déterminer des informations (102) relatives à la condition du pneu (190) en fonction de la ou des propriétés optiques de la surface (191) pour la position de pixel respective, dans lequel les informations (102) relatives à la condition du pneu (190) comprennent des informations relatives à une présence de fissures dans la surface (191) du pneu (190), et dans lequel le système de circuits de traitement (120) est configuré pour déterminer les informations relatives à la présence de fissures dans la surface (191) du pneu (190) par :
la détermination d'un gradient de la valeur de retard sur les positions de pixel ;
si un changement de grandeur du gradient est supérieur à une valeur seuil de grandeur, la détermination qu'une fissure est présente dans la surface (191) au niveau d'une position de surface correspondant à la ou aux positions de pixel du changement de grandeur au-dessus de la valeur seuil de grandeur ; et
la détermination qu'aucune fissure n'est présente dans la surface (191) au niveau de position de surface correspondant à des positions de pixel pour lesquelles le changement de grandeur du gradient est inférieur à la valeur seuil de grandeur.

2. Appareil (100) selon la revendication 1, dans lequel le système de circuits de traitement (120) est configuré pour décomposer la matrice de Mueller respective à l'aide d'un modèle d'apprentissage automatique entraîné.

3. Appareil (100) selon la revendication 1 ou la revendication 2, dans lequel la ou les propriétés optiques de la surface (191) pour la position de pixel respective comprennent une valeur de dépolarisation représentant un degré de dépolarisation de lumière causé par la surface (191), et dans lequel les informations relatives à la condition du pneu (190) comprennent un âge du pneu (190).

4. Appareil (100) selon la revendication 3, dans lequel le système de circuits de traitement (120) est configuré pour déterminer l'âge du pneu (190) en comparant la valeur de dépolarisation déterminée pour la position de pixel respective à un ou plusieurs seuils, le ou les seuils délimitant des plages de valeurs pour la valeur de dépolarisation pour différents âges possibles du pneu (190).

5. Appareil (100) selon l'une quelconque des revendications 1 à 4, dans lequel le système de circuits d'interface (110) est configuré en outre pour recevoir des données d'illumination (103) indiquant une intensité de lumière respective utilisée pour l'illumination de la surface (191) du pneu (190) tout en capturant les images individuelles de la séquence, et dans lequel le système de circuits de traitement (120) est configuré pour déterminer la matrice de Mueller respective en fonction en outre de l'intensité de lumière respective utilisée pour l'illumination de la surface (191) du pneu (190).

6. Appareil (100) selon l'une quelconque des revendications 1 à 5, dans lequel les images de la séquence représentent les intensités pour différentes polarisations de lumière linéaires et circulaires.

7. Appareil (100) selon la revendication 6, dans lequel quatre images de la séquence représentent les intensités pour de la lumière à polarisation linéaire, dont le champ électrique est confiné le long d'une direction de propagation de la lumière réfléchie (141) dans un plan à un angle respectif par rapport à un axe de référence perpendiculaire à la direction de propagation de la lumière réfléchie (141), les angles étant 0°, 45°, 90° et 135°, dans lequel une image de la séquence représente les intensités pour de la lumière à polarisation circulaire gauche, et dans lequel une image de la séquence représente les intensités pour de la lumière à polarisation circulaire droite.

8. Appareil (100) selon l'une quelconque des revendications 1 à 7, comprenant en outre :
un élément d'illumination (130) configuré pour illuminer séquentiellement la surface (191) du pneu (190) avec de la lumière (131) de polarisations différentes ; et
un capteur d'image de polarisation configuré pour :
recevoir la lumière réfléchie (141) par la surface (191) du pneu (190) ;
générer les images de la séquence en fonction de la lumière réfléchie (141) reçue ; et
délivrer en sortie les données d'image (101).

9. Appareil (100) selon la revendication 8, dans lequel l'élément d'illumination (130) est configuré pour illuminer séquentiellement la surface (191) du pneu (190) avec de la lumière (131) de polarisations de lumière linéaires et circulaires différentes.

10. Appareil (100) selon la revendication 9, dans lequel l'élément d'illumination (130) est configuré pour illuminer séquentiellement la surface (191) du pneu (190) au moins avec de la lumière à polarisation circulaire et de la lumière à polarisation linéaire, le champ électrique de la lumière à polarisation linéaire étant confiné le long d'une direction de propagation de la lumière réfléchie dans un plan à un angle respectif par rapport à un axe de référence perpendiculaire à la direction de propagation de la lumière réfléchie, les angles étant 0°, 45°, 90° et 135°.

11. Appareil (100) selon l'une quelconque des revendications 8 à 10, dans lequel l'élément d'illumination (130) est configuré pour illuminer séquentiellement la surface (191) du pneu (190) avec de la lumière infrarouge présentant une longueur d'onde supérieure à 1000 nm et inférieure à 1700 nm.

12. Véhicule (600), comprenant :
un ou plusieurs pneus (611) ;
un appareil (630) selon l'une quelconque des revendications 1 à 11, dans lequel le pneu est l'un parmi le ou les pneus (100) ; et
un ou plusieurs processeurs (640) configurés pour commander un affichage (650) du véhicule (600) pour délivrer en sortie une représentation graphique dérivée des informations relatives à la condition du pneu (611).

13. Dispositif mobile (800), comprenant :
un appareil (810) selon l'une quelconque des revendications 1 à 11 ; et
un ou plusieurs processeurs (820) configurés pour commander un affichage (830) du dispositif mobile (800) pour délivrer en sortie une représentation graphique dérivée des informations relatives à la condition du pneu.

14. Procédé (900) permettant de déterminer une condition d'un pneu, le procédé (900) comprenant :
la réception (902) de données d'image représentant une séquence d'images, dans lequel chaque image de la séquence comprend une pluralité de pixels représentant une distribution spatiale d'intensités de lumière réfléchie étant réfléchie par une surface du pneu, et dans lequel chaque image de la séquence représente les intensités pour une polarisation de lumière différente ; et
la détermination (904), pour au moins une partie des positions de pixel dans les images de la séquence, d'une matrice de Mueller respective en fonction des intensités données dans les images de la séquence ;
la décomposition (906) de la matrice de Mueller respective pour déterminer une ou plusieurs propriétés optiques de la surface pour la position de pixel respective, dans lequel la ou les propriétés optiques de la surface pour la position de pixel respective comprennent une valeur de retard représentant un degré de retard optique causé par la surface ; et
la détermination (908) d'informations relatives à la condition du pneu en fonction de la ou des propriétés optiques de la surface pour la position de pixel respective, dans lequel les informations relatives à la condition du pneu comprennent des informations relatives à une présence de fissures dans la surface du pneu, et dans lequel la détermination des informations relatives à la présence de fissures dans la surface du pneu comprend :
la détermination d'un gradient de la valeur de retard sur les positions de pixel ;
si un changement de grandeur du gradient est supérieur à une valeur seuil de grandeur, la détermination qu'une fissure est présente dans la surface au niveau d'une position de surface correspondant à la ou aux positions de pixel du changement de grandeur au-dessus de la valeur seuil de grandeur ; et
la détermination qu'aucune fissure n'est présente dans la surface au niveau de position de surface correspondant à des positions de pixel pour lesquelles le changement de grandeur du gradient est inférieur à la valeur seuil de grandeur.

15. Support non transitoire lisible par machine sur lequel est stocké un programme ayant un code de programme permettant de mettre en œuvre le procédé selon la revendication 14, lorsque le programme est exécuté sur un processeur ou un matériel programmable.
